# DEMANDE DE BREVET EUROPEEN

(11) **EP 1 445 636 A1**
(43) Date de publication de la demande: **11.08.2004**
(21) Numéro de dépôt: 03292745.1
(22) Date de dépôt: 03.11.2003
(51) Int. Cl.: G02B 23/00

(54) **Télescope optique grand champ, en particulier pour l'observation astronomique à partir d'un satellite**

(30) Priorité: 07.02.2003 FR 0301446
(71) Demandeur: ALCATEL, 75008 Paris (FR)
(72) Inventeur: Singer, Christian, 06400 Cannes (FR); Viard, Thierry, 06210 Mandelieu (FR)
(74) Mandataire: Smith, Bradford Lee

(57) **Abrégé**

Télescope optique de grand champ, en particulier pour être installé à bord d'un véhicule, tel qu'un satellite spatial, à des fins d'observation astronomique ou terrestre ou planetaire.

Il comporte :
- un plan focal (4) ;
- un miroir (5) concave, qui réfléchit de manière convergente le faisceau constitué par le rayonnement qu'il reçoit de la zone qu'il observe ;
- un correcteur de champ (8) dioptrique, achromatique et préférablement athermique, inséré sur le trajet du faisceau convergent réfléchi par le miroir, en aval du correcteur d'ouverture par rapport à ce miroir ;
- ces élements étant mutuellement alignés selon un axe de symétrie (o) ;
caractérisé en ce qu'il comporte en outre :
- un correcteur d'ouverture (6), dioptrique, achromatique et préférablement athermique, inséré sur le trajet du faisceau convergent réfléchi par le miroir ;
- une pupille (7) positionnée sur le trajet du faisceau convergent réfléchi.

Différentes variantes géométriques sont proposées.

## Description

L'invention concerne une architecture optique de télescope grand champ et en particulier un télescope destiné à être installé à bord d'un véhicule. Ce véhicule est par exemple un satellite spatial exploitant le télescope à des fins d'observation astronomique , comme prévu par exemple par le programme d'observation astronomique EDDINGTON.

Comme il est connu, les exigences, en matière d'observation depuis un satellite, qui sont actuellement demandées, impliquent par exemple un grand champ de l'ordre de six degrés et une surface de collection par télescope de 0.2 m² au minimum. Il est par ailleurs souhaité que le télescope soit le plus simple possible et le moins encombrant pour limiter sa masse et les risques de réalisation.

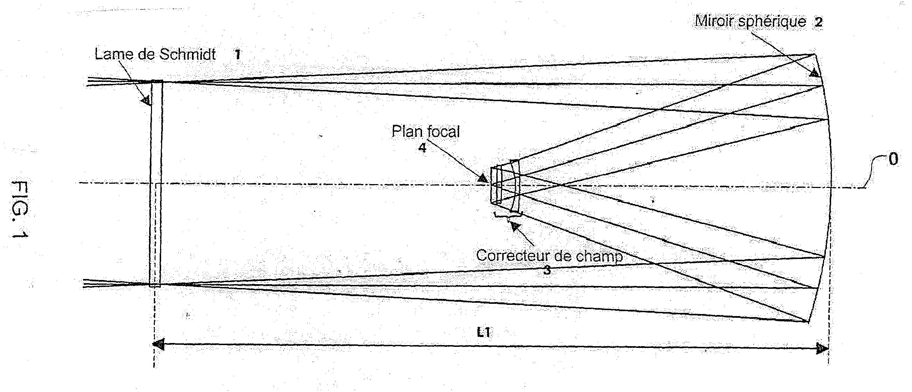

Ces exigences en matière d'observation (grand champ et surface collectrice importante) sont susceptibles d'être respectées par le télescope de SCHMIDT. C'est une architecture optique connue et utilisée pour les télescopes d'observation astronomique. Ce télescope comporte une lame de SCHMIDT (1) à faces planes et parallèles, dont une surface est asphérique, qui est la pupille d'entrée du télescope. Cette lame de SCHMIDT est placée au centre de courbure du miroir sphérique, qui réfléchit le faisceau transmis par la lame de SCHMIDT et le focalise au niveau d'un plan focal PF (4). Ce plan focal présentant de la courbure de champ, un correcteur de champ (3) est en général placé devant ce plan focal (4) pour donner un champ plan. Un tel système est encombrant avec, par exemple, une dimension L1, telle qu'illustrée sur la figure 1, qui est de 2 mètres pour un télescope d'un mètre de focale. Les autres solutions optiques ne permettent pas de combiner à la fois un grand champ et une grande surface collectrice :
- Les solutions dioptriques offrent la possibilité d'avoir de grands champs mais la surface collectrice est limitée.
- Les solutions à miroirs du type TMA (trois miroirs asphériques hors d'axe), ou OMA dans lequel les deux derniers miroirs sont remplacés par un groupe de lentille dont une au moins est asphérique, offrent de grandes surface collectrices mais ne peuvent pas fournir une bonne qualité image sur un grand champ.

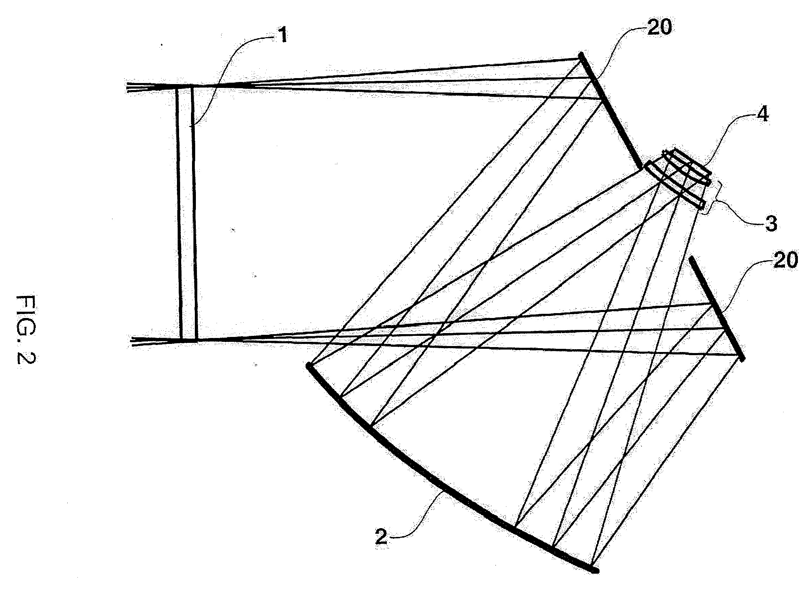

Un télescope de SCHMIDT a plusieurs inconvénients :
- Il implique la réalisation d'une lame de Schmidt qui est couteuse, dans la mesure où il faut une pièce en verre de grande dimension avec une très bonne homogénéité, les risques de casse lors de sa fabrication et de sa manipulation sont importants, le contrôle d'une surface asphérique plane est plus difficile qu'une surface asphérique ayant de la puissance (convergeante ou divergeante) car il n'est pas possible de former une tache image.
- Le plan focal est placé entre la lame de Schmidt et le miroir sphérique, donc difficile d 'accés. Une solution est d'utiliser une configuration dite « repliée » comme illustrée sur la figure 2. Cette configuration présente l'inconvénient d'avoir un miroir plan supplémentaire de grande dimension. Pour limiter la lumière parasite induite par éclairement direct du plan focal par le fond de la scène observée, il est nécessaire de masquer le plan focal en le positionnant derrière le miroir plan ce qui augmente l'obturation centrale du système.

L'invention propose donc une télescope optique de grand champ. Un tel télescope est avantageusement prévu pour être embarqué à bord d'un véhicule et en particulier à bord d'un satellite spatial à des fins d'observation grand champ par exemple astronomique.

Selon une caractéristique de l'invention, cette architecture optique de télescope comporte :
- un plan focal 4 ;
- un miroir concave 5, qui réfléchit de manière convergente le faisceau constitué par le rayonnement qu'il reçoit de la zone qu'il observe ;
- un correcteur de champ 8, dioptrique et achromatique, inséré sur le trajet du faisceau convergent réfléchi par le miroir ;
Caractérisée en ce qu'elle comporte en outre :
- un correcteur d'ouverture 6, dioptrique et achromatique, inséré sur le trajet du faisceau convergent réfléchi par le miroir ;
- une pupille 7 positionnée sur le trajet du faisceau convergent réfléchi, de manière à permettre d'obtenir un grand champ de vue.
- l'ensemble de ces optiques sont alignées et centrées sur le même axe optique de manière à assurer la qualité image sur tout le champ d'observation.

Selon une forme de réalisation, la pupille 7 est placée sur la face du correcteur d'ouverture 6 qui reçoit le faisceau convergent réfléchi par le miroir.

Selon une variante de l'invention, le correcteur d'ouverture 6 et le correcteur de champ 8 sont des correcteurs achromatiques, sans puissance ou quasiment sans puissance.

Selon une variante, le correcteur d'ouverture 6 et le correcteur de champ 8 sont respectivement constitués chacun de lentilles d'au moins deux types de verre différents.

Selon une réalisation avantageuese, le choix des indices des verres d'au moins un des correcteurs peut être exploité pour prendre en compte les variations occasionnées par la température.

Selon une forme de réalisation de l'invention, il est aussi prévu un mécanisme de refocalisation agissant soit sur les lentilles du correcteur de champ 8 soit sur le plan focal 4.

Selon une forme de réalisation de l'invention, il est prévu un auxiliaire 9 intervenant au niveau du faisceau. Cet auxiliaire peut être tout élement optique utile, tel qu'un éclateur spectral, à prismes dichroïques et divolis, permettant de partager le signal lumineux spectralement. Ou encore, l'auxiliaire (9) pourrait être un dérotateur d'image, ou encore, une lame séparatrice permettant de diviser le faisceau pour obtenir des images dans des plans focaux différents.

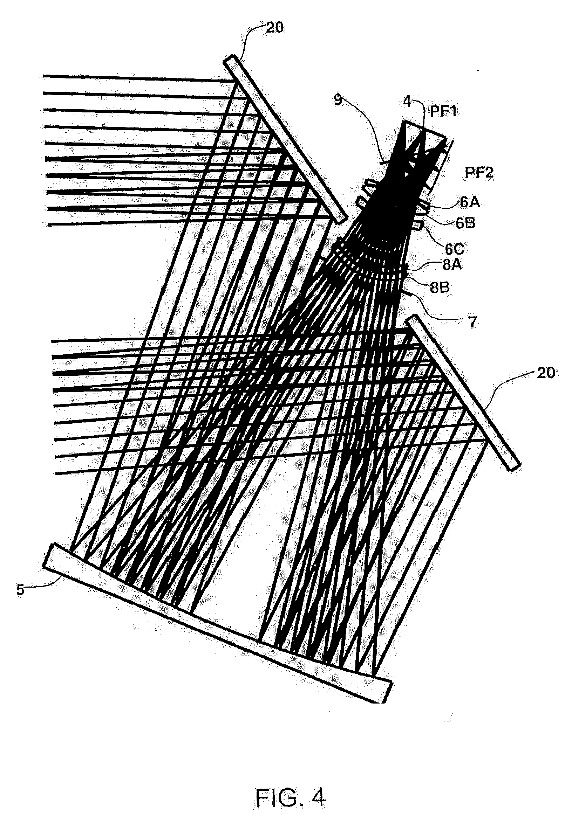

Selon une forme de l'invention, un miroir plan 20 peut être placé devant le télescope de manière à positionner le plan focal 4 en dehors du faisceau incident, suivant l'architecture présentée sur la figure 4, pour pouvoir aménager l'auxiliaire ci-dessus sans augmenter l'obturation centrale.

L'invention, ses caractéristiques et ses avantages sont précisés dans la description qui suit en liaison avec les figures évoquées ci-dessous.

Les figures 1 et 2 correspondent respectivement à une vue selon un plan de symétrie du télescope de Schmidt dans sa configuration nominale et dans sa configuration repliée.

La figure 3 correspond respectivement à une vue selon un plan de symétrie du télescope, selon l'invention.

La figure 4 est une vue relative à une variante de réalisation du télescope selon l'invention pour application avec un auxiliaire 9 dans le plan focal 4 (configuration repliée).

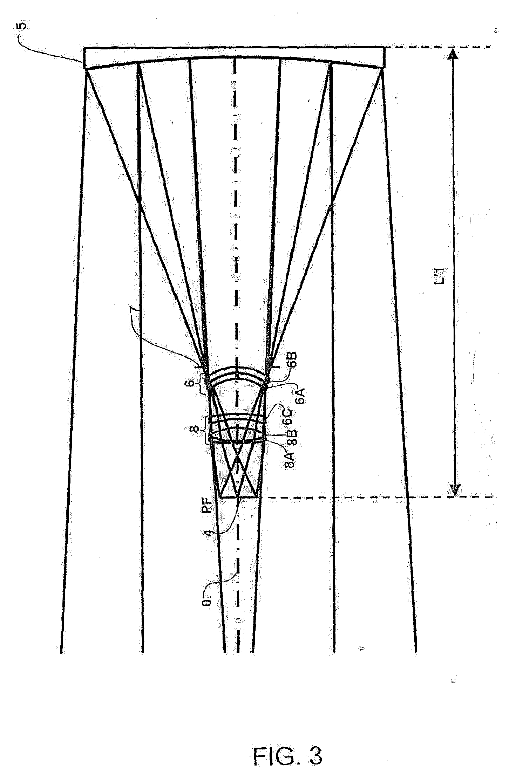

L'architecture optique de télescope d'observation illustrée sur les figures 3 et 4 est destinée à être substituée à celle présentée sur les figures 1 et 2.

A cet effet, le télescope selon l'invention comporte un premier miroir concave 5, qui réfléchit de manière convergente le faisceau constitué par le rayonnement qu'il reçoit de la zone qu'il observe. Les correcteurs dioptriques placés devant le plan focal 4 sont corrigés des aberrations chromatiques. A cet effet, un correcteur d'ouverture 6, dioptrique et achromatique, qui est sans puissance ou quasiment sans puissance, est inséré sur le trajet du faisceau convergent réfléchi par le miroir 5. Ce correcteur est constitué d'au moins deux lentilles 6A, 6B, constituées de types de verre différents, pour corriger le chromatisme. Des tels verres existent dans le commerce. La pupille 7 du télescope est préférablement placée sur la face avant du correcteur d'ouverture 6 qui reçoit le faisceau convergent réfléchi par le miroir 5. Un correcteur de champ 8, dioptrique et achromatique, sans puissance ou quasiment sans puissance, est inséré sur le trajet du faisceau convergent réfléchi par le miroir 5, en aval du correcteur d'ouverture 7 par rapport à ce miroir 5. Ce correcteur de champ 8 est lui aussi constitué d'au moins deux lentilles de types de verre différents pour corriger le chromatisme ; trois lentilles 8A, 8B, 8C, supposées constituées de types de verre différents, étant présentées sur les deux figures 3 et 4. Le choix des indices respectifs des verres peut être exploité pour permettre de prendre en compte les variations occasionnées par la température.

Le télescope optique réalisé présente l'avantage de faciliter l'alignement des éléments constitutifs du télescope que constituent le miroir et les correcteurs. Elle permet la refocalisation de manière simple, au moyen d'un mécanisme permettant de déplacer les lentilles du correcteur de champ ou de déplacer la position du plan focal. L'alignement est facilité par le fait que le télescope dispose d'un axe commun de symétrie de révolution.

Il permet également l'utilisation d'auxiliaires permettant d'intervenir au niveau du faisceau, selon les applications visées et par exemple d'associer au télescope un éclateur spectral, un dérotateur, une lame séparatrice...

L'éclateur spectral est par exemple un éclateur à prismes dichroïques et diviseurs optiques en ligne, ou divolis, qui permet de diviser un faisceau reçu par domaines spectraux. Le dérotateur permet une rotation d'image par exemple pour que les images successivement obtenues au cours d'un déplacement et donc en particulier d'un déplacement en orbite, soient maintenues dans une même direction tenant compte de la vitesse du véhicule portant le télescope. La lame séparatrice (illustration d'un exemple d'auxiliaire (9) sur la figure 4) est exploitable pour partager le flux qu'elle reçoit par exemple pour obtenir des images dans deux plans focaux différents (PF1 et PF2 sur la figure 4).

Les dimensions L'1 telle qu'illustrée sur la figure 3, qui est susceptible d'être obtenue pour un télescope de 1 mètre de focale est d'environ 1 mètre.

Une réduction significative de l'encombrement du télescope est donc obtenue, la masse du télescope est bien entendu plus faible que précédemment, les lentilles mises en oeuvre avec le premier et seul miroir étant bien plus légères que la lame de Schmidt. La réduction dimensionnelle et la simplification de l'architecture optique ne se fait pas au détriment de la lumière parasite, de plus, elle facilite la réalisation des baffles de protection contre les signaux parasites.

## Revendications

1. Télescope optique de grand champ, en particulier pour être installé à bord d'un véhicule, tel qu'un satellite spatial ou un aéronef, à des fins d'observation astronomique ou terrestre, comportant :
- Un plan focal (4) ;
- un miroir concave (5), qui réfléchit de manière convergente le faisceau constitué par le rayonnement qu'il reçoit de la zone qu'il observe ;
- un correcteur de champ (8), dioptrique et achromatique, inséré sur le trajet du faisceau convergent réfléchi par le miroir vers le plan focal (4) ;
- ces élements étant mutuellement alignés selon un axe de symétrie (O) ;
**caractérisé en ce qu'**il comporte en outre :
- un correcteur d'ouverture (6), dioptrique et achromatique, inséré sur le trajet du faisceau convergent réfléchi par le miroir ;
- une pupille (7) positionnée sur le trajet du faisceau convergent réfléchi

2. Télescope optique selon la revendication 1, **caractérisé en ce que** ledit miroir (5) est asphérique.

3. Télescope optique selon l'une des revendications 1 et 2, **caractérisé en ce que** ledit correcteur d'ouverture est placé entre ledit mirior (5) et ledit correcteur de champ (8).

4. Télescope optique selon l'une des revendications précedentes, **caractérisé en ce que** ladite pupille (7) est placée sur la face avant du correcteur d'ouverture (6) qui reçoit le ou les faisceau(x) convergent(s) réfléchi(s) par le miroir.

5. Télescope optique selon l'une des revendications précedentes, **caractérisé en ce que** ledit correcteur d'ouverture (6) et ledit correcteur de champ (8) sont athermiques et sans puissance ou quasiment sans puissance.

6. Télescope optique selon l'une des revendications précedentes, **caractérisé en ce qu'**au moins l'un des correcteurs d'ouverture (6) ou champ (8) est constitué de lentilles d'au moins deux types de verre différents.

7. Télescope optique selon la revendication 6, **caractérisé en ce que** le choix des indices des verres d'au moins l'un des correcteurs est exploité pour prendre en compte les variations occasionnées par la température.

8. Télescope optique selon l'une des revendications précedentes, **caractérisé en ce qu'**elle comporte un mécanisme de refocalisation agissant soit sur les lentilles du correcteur de champ soit sur la position du plan focal.

9. Télescope optique selon l'une des revendications précedentes, **caractérisé en ce qu'**il comporte un auxiliaire (9) inséré sur le trajet du faisceau, entre les correcteurs d'ouverture (6) et du champ (8) et le plan focal.

10. Télescope optique selon la revendication 9, **caractérisé en ce que** ledit auxiliaire (9) est un éclateur spectral, à prismes dichroïques et divolis, permettant de partager ledit faisceau spectralement.

11. Télescope optique selon la revendication 9, **caractérisé en ce que** ledit auxiliaire (9) est un dérotateur d'image.

12. Télescope optique selon la revendication 9, **caractérisé en ce que** ledit auxiliaire (9) est une lame séparatrice permettant de diviser le faisceau pour obtenir des images dans des plans focaux différents (PF1, PF2).

13. Télescope optique selon l'une des revendications précedentes, **caractérisé en ce qu'**il comporte un miroir plan (20), permettant de positionner le plan focal en dehors du faisceau incident pour, par exemple introduire un auxiliaire (9) devant le plan focal sans augmenter l'obturation centrale.
